Europäisches Patentamt

European Patent Office

Office européen des brevets

(11) Publication number: **0 284 570**
**A1**

## (12) EUROPEAN PATENT APPLICATION

(21) Application number: 88830092.8

(22) Date of filing: 09.03.88

(51) Int. Cl.4: **A 01 G 25/02**

(30) Priority: 09.03.87 IT 1690187

(43) Date of publication of application:
28.09.88 Bulletin 88/39

(84) Designated Contracting States:
AT BE CH DE ES FR GB GR IT LI LU NL SE

(71) Applicant: Pietrosanti, Franco
Via del Fiume, 8
I-04010 Sermoneta (Latina) (IT)

(72) Inventor: Pietrosanti, Franco
Via del Fiume, 8
I-04010 Sermoneta (Latina) (IT)

(74) Representative: Gardi, Giuliano
GARDIPATENT Palazzo Prora Via Giardini, 605
I-41100 Modena (IT)

(54) A flexible, flattenable hose with outlet fittings along its length, particularly for irrigation.

(57) The flattened hose (1) exhibits radial holes (3) along one face, each of which serves to anchor an outlet fitting the base of which consists in a flange (4) with an externally threaded collar (6), the flange remaining inside the hose, and the collar projecting radially from the hole to enable fitment of a washer (8) and a lock nut (10); the surfaces of the flange and the washer that breast with the part of the hose encircling the radial hole are frusto-conical, converging downward toward the axis of the hose and embodied with sets of concentric annular ridges (5, 9). The flanged base component is slipped into the hose (1) from one end (2) and passed along inside until in alignment with the radial hole (3) through which the collar (6) is to be inserted.

Fig.6

EP 0 284 570 A1

## Description

A flexible, flattenable hose with outlet fittings along its length, particularly for irrigation.

The invention relates to a flexible and flattenable hose, particularly for irrigation, incorporating outlet fittings along its lenght, that is, a flexible tube, say in fabric-reinforced PVC, that can be folded flat, and which is provided along one flat face with radial holes into each one of which a metal fitting is inserted to enable connection of the screwed and - fitting of any given branch irrigation hose, or other possible uses such as fire-extinguishing or provisional waterworks.

The prior art embraces metal pipelines with upwardly directed, integrally embodied fittings whereon to screw vertical lenghts of metal pipe the top ends of which are fitted with fixed or swinging nozzles that rain water on the surrounding soil; such pipelines can be installed either at ground level or sunken.

The prior art also comprises an irrigating machine consisting in a reel, some few metres In diameter, that carries a coil of flexible, but non-flattenable hose, connected to a pressurized water supply; the hose is unwound by a mechanical-hydraulic device, and its outlet end mounted to a retractable bogey fitted with a swinging rainer nozzle.

It is also known a flexible, flattenable hose for fire-extinguishing, having only an inlet hole and an outlet hole at the opposite ends, without lateral outlets. The metal pipeline is a mobil system, though at the expense of a time-and energy- consuming procedure in dismantling and transporting the various lengths of pipe; the reel, whilst genuinely mobile, is complex, heavy and cumbersome, requiring a high or medium powered tractor to manoeuvre it, and is expensive, not within the financial reach of all growers.

Italian utility model no. 191399 discloses the idea, proposed by the same applicant, or replacing the normal flexible hose with a plastic-and-webbing type that can also be flattened, and wound thus on a drum or reel; such a hose is provided with outlets ranged along the length of one flat face, each one of which affords a connection point for a pipe or hose of the type used to branch off water for irrigation, using rainers or whatever method. The single outlet, which might be embodied, say, in stainless material, comprises two components: one, a base in the form of a flange provided at centre with an externally threaded central collar, the flange breasting with the internal surface of the hose that encircles the radial outlet hole through which the threaded collar is inserted; the other, a lock nut which is screwed onto the collar to the point where the part of the hose encircling the outlet hole is clamped against the flange. The topmost lip of the collar and the outermost edge of the lock nut have holes and/or notches for tightening purposes.

With an arrangement such as this, the weight, cost and size of the irrigating machine can be reduced considerably, enabling it to be towed by a small tractor from one water supply point to another.

Moreover, the outlets constitute no obstacle when winding the hose onto the reel.

Nonetheless, the flattenable hose according to the invention disclosed in the aforementioned utility model is not sufficiently watertight, inasmuch as the force that must be applied to the hole cut in the face of the hose to permit of positioning the outlet support flange tends to cut and scratch the hose, and the holes cut for the purpose of enabling insertion of the flange, which is much wider then the radial outlet hole, tend to become enlarged. The prior art thus stands in need of considerable improvement, with regard to preventing the lack of watertightness attributable mainly to insertion of the flange through the relative hole by forcing or cutting the hose material. From the foregoing, one may discern the need for a solution to the technical problem of enabling each flanged collar to be inserted through the relative radial outlet hole, whilst avoiding damage to the edge of the hole and ensuring a watertight fit even with smaller diameter, thinner flanges.

The problem is overcome, according to the invention, with an outlet that consists in three components:
- a flange with an externally threaded collar, of which the flange surface that breasts with the inner surface of the flattenable hose is frusto-conical, converging downward toward the axis of the hose at a preferred angle of approximately 2°, and exihibiting a series of concentric annular ridges;
- a washer, of which the surface breasted with the outer surface of the hose offers a frusto-conical profile complementary to the profile of the flange, converging downward at the same angle and exhibiting identical concentric annular ridges; and
- a lock nut, serving to tighten the washer against the part of the hose encircling the radial outlet hole, and thus against the flange.

The flanged collar disclosed is slipped into one end of a hose in which radial holes are already cut to receive the outlet fittings, and slid along inside until reaching the hole, in which the collar is to be inserted.

Advantages afforded by the invention are: prevention of leaks caused by a poor sealing action between the flange, the hose material around the hole, and the lock nut; the use of a smaller diameter and thinner flange; the facility of obtaining greater curvature of the hose; better durability, elimination of waste as regards the hose material; higher pression, less thickness of the hose, when flattened.

An embodiment of the invention will now be described in detail, by way of example, with the aid of the two accompanying sheets of drawings, in which:

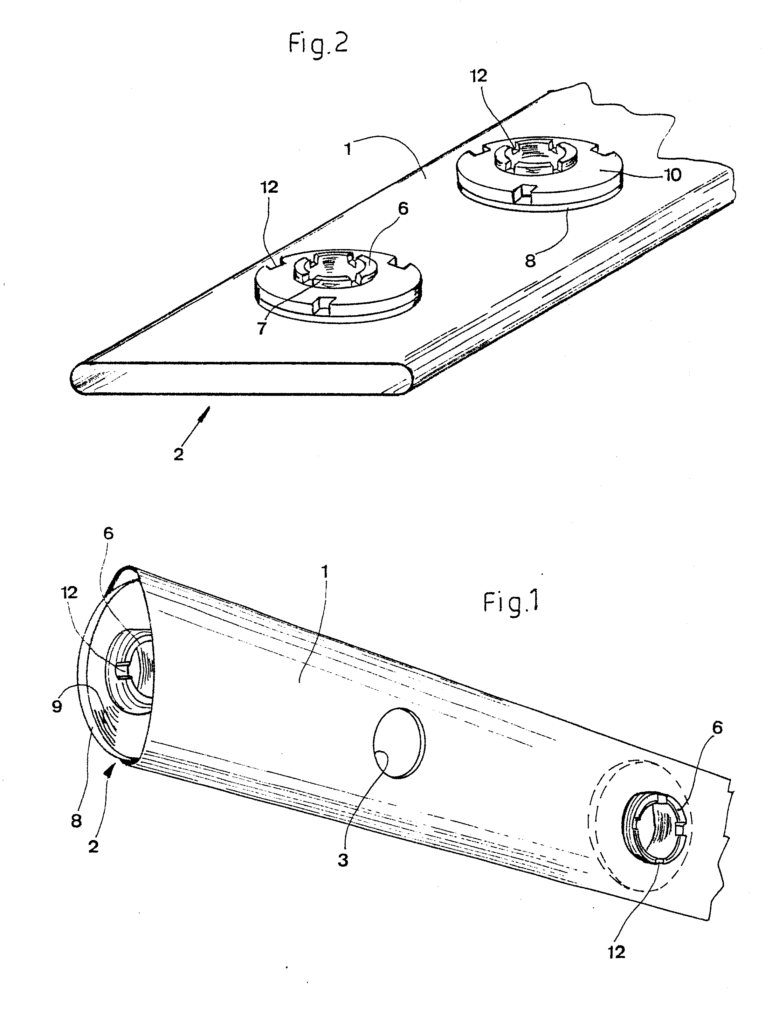

fig 1 is a perspective of the flattenable hose, illustrating the insertion of the flanged collar;

fig 2 is a perspective of the flattened hose with the outlet fittings positioned and tightened

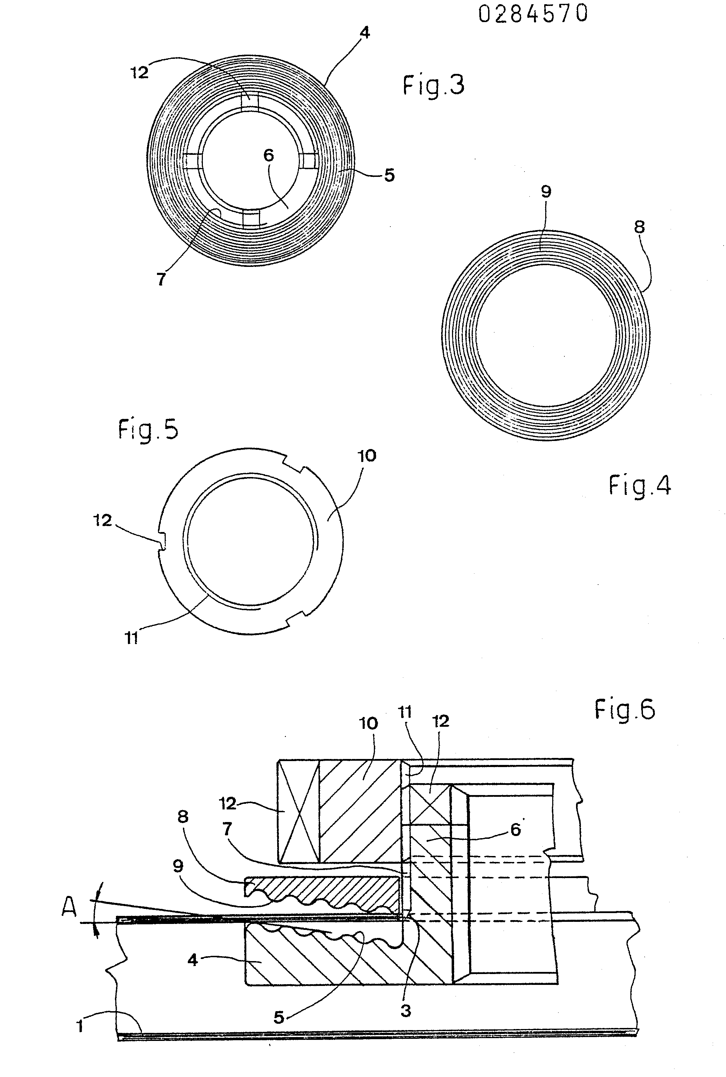

fig 3 shows the flange and collar, viewed in plan;

fig 4 shows the washer from underneath;
fig 5 shows the lock nut, viewed in plan;
fig 6 is a vertical section of part of one fitting, viewed in position in the relative radial hole of the hose, prior to being tightened.

In the six drawings, 1 denotes the flattenable hose, and 2 one of its ends; 3 denotes one of the radial holes cut in one flat face of the hose to accept the outlet fittings. 4 denotes the body of the flange with its concentric annular ridges 5 and central collar 6, the external thread of which is denoted 7.

8 denotes the body of the washer, of which the face offered to the outer surface of the hose exhibits the concentric annular ridges 9.

10 denotes the lock nut, and 11 its internal thread. 12 denotes notches in which to insert a wrench for tightening purposes.

Assembly of the hose will now be described.

With the hose 1 conveniently angled forward, laid either flat or on edge with the inside spread apart vertically or horizontally, respectively, by running it between a pair of suitably spaced rollers, one or more base components, each consisting in a flange 4 and a collar 6, are slipped into the end 2, likewise flat or on edge, and fed through to the point where the first component arrives in alignment with the farthest empty radial hole 3 offered by the hose; the collar 6 is then inserted through the hole, the washer 8 placed over the collar, and the lock nut 10 screwed onto the external thread 7 and tightened.

The same procedure is repeated for the remainder of the fittings, and the option exists of automating such an assembly procedure wholly or in part.

**Claims**

1. A flexible, flattenable hose with outlet fittings along its length, particularly for irrigation, comprising a flexible and flattenable hose (1) affording at least one radial hole (3), at least one base component embodied as a flanged externally threaded collar (6) of which the collar passes through the radial hole and projects radially from the hose and the flange remains inside the hose, and at least one lock nut (10) with an internal thread (11) that is screwed onto the collar to create an outlet fitting for the connection of any given means of diverting water from the hose; characterized in that the outlet fitting comprises:
- a base component, embodied as a flange (4) with an externally threaded collar (6), of which the flange surface that breasts with the inner surface of the hose (1) encircling the radial hole (3) is frusto-conical, converging downward toward the axis of the hose at a preferred angle (A) of approximately 2°;
- a washer (8), of which the surface offered to the outer surface of the hose exhibits a frusto-conical profile complementary to that of the flange; and
- a lock nut (10) with an internal thread (11), that serves to clamp the washer against the hose material encircling the outlet, and against the flange.

2. A hose as in claim 1, wherein the respective frusto-conical surfaces of the flange (4) and the washer (8) that are offered to the part of the hose (1) encircling the radial hole (3) are embodied with sets of concentric annular ridges (5, 9).

3. A hose as in claims 1 and/or 2, wherein the collar (6) of the base component of the fitting is inserted through the relative radial hole (3) from inside the hose (1), the component being first introduced at one end of the hose and passed internally along its length until arrival at the corresponding hole.

0284570

Fig.2

Fig.1

0284570

Fig.3

Fig.4

Fig.5

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 551 834 (NOBEL PLASTIQUES) <br> * Page 2, line 25 - page 4, line9; figure 1-3 * | 1,2 | A 01 G 25/02 |
| Y | US-A-4 606 562 (SARACENO) <br> * Column 3, line 17 - column 5, line 25; figures 1-3 * | 1,2 | |
| Y | AU-B- 412 134 (ICI) <br> * Page 4, last paragraph - page 6, first paragraph; figures 1-4 * | 1,2 | |
| A | GB-A- 566 954 (CALDWELL) <br> * Page 2, line 63 - page 3, line 21; figures 1-7 * | 1,2 | |
| A | US-A-2 145 451 (McCOY) <br> * Whole document * | 1 | |
| | | | TECHNICAL FIELDS SEARCHED (Int. Cl.4) |
| | | | A 01 G <br> B 05 B <br> F 16 L |

The present search report has been drawn up for all claims

| Place of search | Date of completion of the search | Examiner |
|---|---|---|
| THE HAGUE | 28-06-1988 | HERYGERS J.J. |

EPO FORM 1503 03.82 (P0401)